# FASCICULE DE BREVET EUROPEEN

(11) **EP 2 204 587 B1**
(45) Date de publication et mention de la délivrance du brevet: **02.10.2013**
(21) Numéro de dépôt: 09291002.5
(22) Date de dépôt: 31.12.2009
(51) Int. Cl.: F16B 12/12, F16B 5/06

(54) **Clé d'assemblage d'éléments de mobilier**
Verbindungsbeschlag für Möbelelemente
Connection fitting for furniture elements

(30) Priorité: 05.01.2009 FR 0900009
(43) Date de publication de la demande: 07.07.2010
(73) Titulaire: Gautrot, Anne, 91560 Crosne (FR)
(72) Inventeur: Gautrot, Anne, 91560 Crosne (FR)

(56) Documents cités:
- WO-A-2007/003016
- US-B1- 6 357 960

## Description

La présente invention a pour objet une clé d'assemblage pour des éléments de mobilier. Elle est plus spécifiquement destinée à l'assemblage de deux éléments de mobilier entre eux par accolement de deux faces planes que chacun d'eux comporte, que ces éléments de mobilier se présentent sous la forme de panneaux plans ou sous forme de volumes plus complexes comportant des surfaces planes pouvant être accolées entre elles (par exemple des poteaux).

Elle vise à proposer une clé d'assemblage qui soit facilement démontable, à l'inverse des dispositifs déjà connus qui mettent par exemple en oeuvre des dispositifs à double queue d'aronde tels que les dispositifs connus notamment par le document FR 2846537, dispositifs qui nécessitent l'emploi d'un outil pour repousser longitudinalement la clé afin de la retirer quand on souhaite désaccoupler les éléments que cette clé assemble.

*De même, le document* WO 2007/003016 A *propose une solution d'assemblage double queue d'aronde composé de deux parties dissociées dont l'une s'intègre dans l'autre pour l'expanser.*

*La présente invention facilite le montage et démontage de pièces de mobilier.*

Dans ce but, l'invention a pour objet une clé destinée à être insérée par coulissement longitudinal simultanément dans deux rainures dont chacune est portée par la face d'accolement de l'un des deux éléments de mobilier à assembler entre eux.

Avantageusement, chacune des faces par laquelle les deux éléments de mobilier doivent être accolés comporte une rainure réalisée de telle manière que, lorsque les deux éléments de mobilier sont placés face à face, les rainures que chacun d'eux portent se trouvent également face à face. Selon un mode de réalisation préféré de l'invention, mais non exclusif, la section droite de chacune de ces rainures s'élargit de la face d'accolement vers le coeur de l'élément de mobilier, de telle sorte qu'un élément ne peut être inséré dans ces rainures que selon une direction parallèle au plan de la face dans laquelle elle a été ménagée, et ne peut également en être retiré que par coulissement selon cette même direction, à l'exclusion de tout retrait selon une direction perpendiculaire au plan de la face dans laquelle la rainure a été ménagée.

La forme de section droite la plus couramment utilisée pour de tels assemblages, notamment dans le cadre d'éléments de mobilier en bois, est celle d'une queue d'aronde, mais il est à noter que cette forme n'est pas exclusive et que toute forme qui n'autorise l'insertion d'un élément que par coulissement selon une direction parallèle au plan de la face dans laquelle la rainure est ménagée, à l'exclusion de tout autre type de mouvement, pourra être mise en oeuvre sans que cela nuise à l'invention.

Pour plus de clarté, l'invention sera décrite dans ce qui suit dans le cadre de l'assemblage de deux éléments de mobilier face contre face lorsque les rainures réalisées dans chacune des faces d'accolement ont une section droite en forme de queue d'aronde : quand les éléments sont rapprochés l'un de l'autre pour être assemblés, les rainures se trouvent donc situées tête bêche.

Selon une de ses caractéristiques principales de nouveauté, la clé selon l'invention comporte un dispositif d'extraction qui comprend une poignée mobile entre une première position dans laquelle elle est insérée et verrouillée dans la clé, et d'autres positions dans lesquelles cette poignée permet la manoeuvre de la clé pour extraire cette dernière de l'assemblage par coulissement longitudinal.

Plus précisément, selon une autre caractéristique de l'invention, la clé comporte un organe femelle dans lequel un poussoir du dispositif d'extraction est apte à coulisser. Selon différents modes de réalisation de l'invention, c'est ce poussoir lui-même qui, dans l'une de ses positions, constitue la poignée mobile, ou bien ce poussoir est solidaire d'une pièce qu'il entraîne dans son coulissement et qui forme elle-même la poignée mobile.

Dans tous les cas, selon une autre caractéristique de l'invention, le dispositif d'extraction comporte en outre un élément de blocage qui maintient liés entre eux le poussoir dans l'organe femelle, et qui est mobile relativement à ces éléments en définissant, par sa position, la position relative de ces derniers entre eux.

Selon une caractéristique de l'invention, un élément ressort est avantageusement placé entre l'organe femelle et le poussoir, de telle sorte que ce dernier subit constamment une poussée vers l'extérieur de l'organe femelle, tout en étant retenu par l'élément de blocage.

Selon différents modes de réalisation, l'ensemble formé par le poussoir, l'organe femelle, l'élément ressort, et l'élément de blocage, constitue en lui-même la clé selon l'invention, ou constitue une partie seulement de cette dernière. Pour plus de clarté, on se placera, dans ce qui suit, dans le cas où la clé selon l'invention est uniquement constituée du poussoir, de l'organe femelle, et de l'élément de blocage : c'est ici le poussoir qui constitue la poignée mobile.

Selon une caractéristique de l'invention, l'une des positions de l'élément de blocage définit la position de verrouillage du poussoir dans l'organe femelle. Dans cette position, le poussoir est inséré dans l'organe femelle de la clé et se trouve avantageusement affleurant sur la face de l'assemblage par laquelle la clé est insérée. A cette fin, un chambrage peut avantageusement être réalisé autour de chacune des rainures, sur chacun des éléments à assembler, pour accueillir ce poussoir dans le cas où celui-ci présente, par exemple dans un souci esthétique ou pour des raisons de commodité de préhension, à son extrémité apparente une fois l'assemblage réalisé, une forme différente de celle de la section droite de l'organe femelle.

Selon une autre caractéristique de l'invention, l'élément de blocage est en outre apte à prendre d'autres positions dans lesquelles il autorise le déplacement du poussoir au sein de l'organe femelle dans lesquelles la poignée peut être saisie et manoeuvrée par un utilisateur, jusqu'à une position de butée dans laquelle, en exerçant une traction sur la poignée, l'utilisateur peut entraîner l'ensemble de la clé (poussoir, organe femelle, élément ressort, et élément de blocage, ici) à coulisser longitudinalement entre les deux éléments de mobilier assemblés pour être extraite de cet assemblage.

De manière avantageuse, lorsque le poussoir est dans une des positions permettant à un utilisateur de le saisir et de le manoeuvrer, l'organe femelle, selon les différentes variantes de l'invention, ne s'est pas déplacé, ou n'est que partiellement sortie des rainures ménagées sur les éléments de mobilier, de sorte que la clé maintient encore ces derniers assemblés entre eux.

Selon une caractéristique de l'invention dans un de ses modes de réalisation préférés, l'élément de blocage se présente sous la forme d'une tige métallique dont une extrémité est insérée et bloquée dans un logement approprié ménagé dans l'organe femelle, et dont l'autre extrémité est insérée, lors du montage du poussoir dans ledit organe femelle, dans un chemin de circulation et d'arrêt ménagé sur l'une des faces du poussoir.

Selon des modes de réalisation alternatifs avantageux, cet élément de blocage se présente sous la forme d'un ergot formé sur la surface interne de l'organe femelle contre laquelle se place la face du poussoir munie du chemin de circulation et d'arrêt lorsque celui-ci est inséré dans ledit organe femelle, ergot dont la forme le rend apte à être engagé dans ledit chemin.

Selon d'autres variantes de réalisation, le chemin de circulation et d'arrêt peut également être ménagé sur l'une des faces internes de l'organe femelle, l'élément guidé dans ledit chemin étant alors porté par le poussoir.

Selon encore d'autres variantes de l'invention, l'élément guidé est solidaire de l'organe femelle et le chemin de circulation et d'arrêt constitue une pièce mobile, fixée sur le poussoir. Ou encore, l'élément guidé est solidaire du poussoir et le chemin de circulation et d'arrêt constitue une pièce mobile, fixée à l'organe femelle.

Lorsque le poussoir est inséré dans l'organe femelle, l'élément de blocage est guidé dans le chemin de circulation jusqu'à une position d'arrêt qui définit alors la position de verrouillage du poussoir dans l'organe femelle. Lorsque l'utilisateur souhaite retirer la clé selon l'invention, il lui suffit d'exercer une poussée longitudinale sur la face avant du poussoir : l'élément de blocage est alors forcé à quitter sa position d'arrêt puis guidé le long du chemin de circulation jusqu'à une butée ménagée dans celui-ci, butée qui empêche le retrait complet du poussoir et le maintient solidaire, via l'élément de blocage, de l'organe femelle. Sous l'effet d'une traction exercée sur le poussoir, l'organe femelle et l'élément de blocage sont entraînés : la clé selon l'invention peut ainsi être extraite.

De manière avantageuse, lorsqu'un chambrage est réalisé autour des rainures, la profondeur de ce dernier est légèrement supérieure à l'épaisseur correspondante dudit poussoir, de manière à permettre un premier déplacement du poussoir dans le sens d'un enfoncement de ce dernier dans l'organe femelle lorsque l'utilisateur exerce une poussée longitudinale sur la face avant du poussoir.

Avantageusement, mais de manière non impérative, la longueur de la clé selon l'invention est sensiblement inférieure à la longueur sur laquelle les deux éléments de mobilier assemblés sont en contact une fois assemblés grâce à lui. Ceci permet, d'une part, du fait de son encombrement réduit, un retrait plus aisé de cette clé, et autorise en outre l'usinage des rainures sur une partie seulement des faces appelées à être en contact lors de l'assemblage. Il en résulte une simplification de ces opérations d'usinage et une réduction des coûts de réalisation de celles-ci, ainsi qu'une augmentation des possibilités esthétiques, l'assemblage pouvant être totalement invisible à partir d'une autre des faces des éléments de mobilier assemblés.

Selon une autre caractéristique de l'invention, l'intensité de la poussée à exercer sur le poussoir, une fois les éléments de mobilier assemblés, pour dégager l'élément de blocage de sa position d'arrêt, est typiquement supérieure à la pression moyenne que pourrait exercer accidentellement un utilisateur ou un enfant. En d'autres termes, le dégagement de l'élément de blocage pour retirer ensuite l'accessoire de blocage et déverrouiller l'assemblage des deux éléments de mobilier ne peut qu'être le résultat d'une opération intentionnelle exercée avec une force suffisante pour conduire au dégagement de l'élément de blocage.

L'invention présente en outre un ensemble de caractéristiques rendant plus sûrs et plus faciles l'insertion et le retrait de l'accessoire d'assemblage qui est son objet.

Selon l'une de ces caractéristiques, l'organe femelle comporte un ensemble de fentes longitudinales. Ces fentes sont, d'une part, destinées à favoriser l'évacuation de l'air chassé lors de l'insertion du poussoir dans cet organe. Elles permettent en outre une entrée d'air lors du retrait du poussoir, afin d'éviter tout effet de ventouse qui pourrait rendre ce retrait difficile.

Selon une autre de ces caractéristiques, l'organe femelle comporte des moyens de guidage du poussoir dans son coulissement. Selon un mode de réalisation préféré de l'invention, ces moyens prennent la forme d'un ensemble de rainures ménagées sur la face interne dudit organe et d'un ou plusieurs éléments saillants de section droite complémentaire réalisés à la surface du poussoir.

Selon encore une autre des caractéristiques de l'invention dans un de ses modes de réalisation particuliers, la face avant du poussoir est formée pour constituer un bouton décoratif, et la face d'entrée de l'organe femelle comporte un chambrage de faible profondeur apte à accueillir la face avant de ce bouton pour que celui-ci vienne, une fois les éléments de mobilier assemblés, en affleurement de la face par laquelle le poussoir a été inséré.

Selon une autre caractéristique de l'invention dans un autre de ses modes de réalisation avantageux, la face de l'organe femelle par laquelle est inséré le poussoir comporte une collerette. Cette collerette constitue une butée pour l'insertion de l'organe femelle dans les rainures qui sont ménagées dans les éléments de mobilier à assembler, notamment dans le cas où la clé selon l'invention est d'une longueur inférieure à celle de ces rainures.

L'invention permet ainsi de réaliser l'assemblage entre aux moins deux éléments de mobilier distincts par deux faces planes par lesquelles ils se trouvent accolés, assemblage qui est aisément démontable manuellement, sans nécessité d'utiliser un outillage spécifique.

De manière avantageuse, plusieurs rainures peuvent être réalisées à espacements réguliers sur chaque face plane de différents éléments de mobilier, de manière à permettre un assemblage solide entre éléments de mobilier de grande taille.

L'invention permet ainsi de réaliser un mobilier de structure et de forme variable à partir d'éléments de mobilier de même taille ou de tailles différentes, munis de rainures propres à recevoir la clé selon l'invention.

La clé selon l'invention peut en outre constituer un élément décoratif de l'assemblage mobilier.

Dans une variante de l'invention, la clé est réalisée dans une forme générale de queue d'aronde simple de manière à constituer une clé de bouchage de rainures réalisées sur un élément de mobilier qui, une fois les élément de mobilier assemblés entre eux, se trouvent sans une rainure similaire en vis-à-vis et sont visibles de l'extérieur.

L'invention permet aussi de réaliser l'assemblage entre aux moins deux éléments de mobilier distincts au travers de parties évidées permettant à la clé de les traverser lorsque ceux-ci sont positionnés de manière coïncidente, assemblage qui est aisément démontable manuellement, sans nécessité d'utiliser un outillage spécifique.

D'autres caractéristiques et avantages de l'invention ressortiront de la description qui suit de l'un de ses modes de réalisation préférés, en référence aux figures suivantes dans lesquelles :
- la figure 1 est une vue schématique en perspective avant du poussoir, de l'organe femelle et de l'élément de blocage de la clé selon l'invention, dans leur position dans laquelle ils sont prêts à être assemblés,
- la figure 2 est une vue schématique en perspective arrière du poussoir, de l'organe femelle et de l'élément de blocage de la clé selon l'invention, dans leur position dans laquelle ils sont assemblés,
- la figure 3 est une vue schématique en perspective de l'organe femelle de la clé selon l'invention,
- la figure 4 est une vue schématique en perspective du poussoir et de l'élément de blocage de la clé selon l'invention,
- la figure 5 est une vue schématique de la clé selon l'invention dans sa position avant assemblage de deux éléments de mobilier entre eux,
- la figure 6 est une vue schématique en perspective de la clé selon l'invention dans sa position avant assemblage de deux éléments de mobilier entre eux, selon un mode de réalisation alternatif de l'invention,
- la figure 7 est une vue schématique d'un assemblage de deux éléments de mobilier entre eux au moyen d'une clé selon l'invention.
- et la figure 8 est une vue schématique d'un assemblage de deux éléments de mobilier entre eux, au moyen d'une clé dans une variante traversante de l'assemblage selon l'invention.

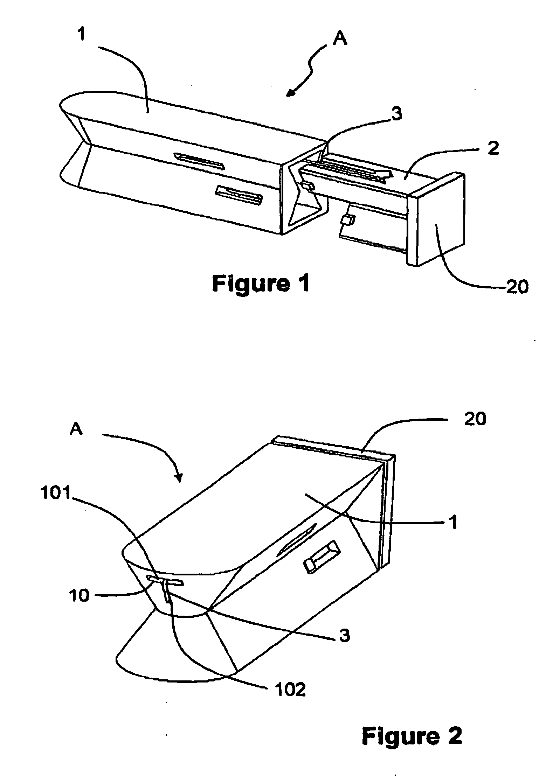

La clé A selon l'invention telle qu'illustrée par les figures 1 à 7 est constituée d'un organe femelle 1, d'un poussoir 2, et d'un élément de blocage 3. Selon le mode de réalisation plus spécifiquement illustré par les figures 1 à 5, ledit élément de blocage prend la forme d'une tige métallique de faible diamètre, recourbée à chacune de ses extrémités selon des directions parallèles entre elles et toutes deux perpendiculaires à sa direction longitudinale principale.

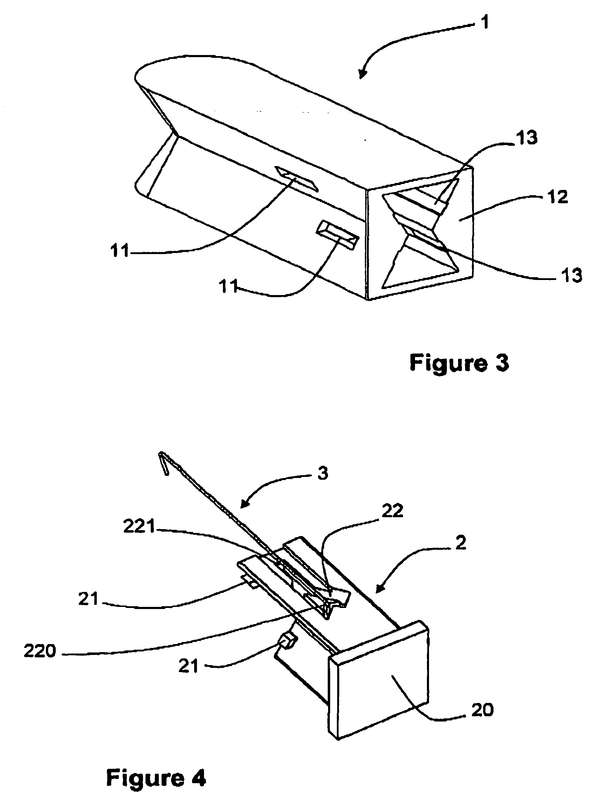

L'organe femelle 1 est plus spécifiquement illustré par la figure 3. Ledit organe femelle 1 présente une forme allongée telle qu'il s'insère sensiblement dans un parallélépipède, sa section droite, extérieure comme intérieure, a la forme d'une double queue d'aronde. Plus précisément, les formes des deux queues d'aronde sont inversées l'une par rapport à l'autre. L'organe femelle 1 est arrondi à son extrémité destinée à être insérée dans des rainures ménagées dans chacun des éléments de mobilier à assembler, de manière à faciliter cette insertion. Il est, de plus, fermé à cette extrémité ainsi que le montre la figure 2, et son extrémité fermée comporte une lumière 10 ayant sensiblement la forme d'un T dont la partie horizontale 101 est traversante et dont la partie verticale 102 forme une gouttière non traversante sur l'épaisseur de l'extrémité fermée de l'organe femelle 1. L'organe femelle 1 comporte également, sur ses faces latérales, un ensemble de lumières 11, et il accueille en sa face avant une collerette 12 perpendiculaire à son axe longitudinal. Enfin, l'organe femelle 1 comporte, en sa face interne, un ensemble de rainures longitudinales 13. Le rôle de ces différents éléments sera précisé plus loin.

Le poussoir 2, représenté en figure 4 accompagné de l'élément de blocage 3, est une pièce mâle allongée dont la section droite, complémentaire de la section droite interne de l'organe femelle 1, a ici la forme d'une double queue d'aronde. Sa face avant forme un bouton 20 perpendiculaire à son axe longitudinal. Il comporte également, en ses faces latérales, un ensemble d'ergots 21 dont le rôle sera précisé plus loin. Il porte en outre, sur l'une de ses faces (sa face supérieure sur la figure 4), un chemin complexe 22 de guidage de la tige métallique 3 qui constitue ici l'élément de blocage de la clé selon l'invention.

Pour insérer le poussoir 2 dans l'organe femelle 1 pour constituer la clé selon l'invention, un ressort hélicoïdal, non représenté sur les figures, est d'abord placé au fond de l'organe femelle 1, puis une des extrémités de la tige 3 est insérée dans la lumière 10 (voir figure 2) où son extrémité recourbée est insérée dans la gouttière verticale 102 dans laquelle elle se trouve bloquée. L'extrémité recourbée opposée de la tige 3 est insérée dans le chemin 22 du poussoir 2, de telle manière que poussoir et organe femelle se trouvent associés dans leurs déplacements relatifs par l'intermédiaire de la tige 3, sans pouvoir être désassociés l'un avec l'autre sans démontage de cette tige.

Lorsque le poussoir 2 est inséré et poussé dans l'organe femelle 1, les ergots latéraux qu'il comporte coopèrent avec les rainures 13 ménagées en face interne dudit organe femelle pour guider le coulissement du poussoir 2.

Dans le même temps, la tige 3 est guidée le long du chemin 22 jusqu'à atteindre un point d'arrêt 220 (voir figure 4). Dans cette position, tout mouvement relatif du poussoir 2 dans l'organe femelle 1 est impossible : ces deux éléments de la clé selon l'invention se trouvent donc verrouillés entre eux. Dans cette position, plus spécifiquement illustrée par la figure 2, le bouton 20 du poussoir 2 se trouve au voisinage immédiat de la collerette 12, sans toutefois être en butée contre celle-ci : avantageusement, un jeu de l'ordre de 1 à quelques millimètres subsiste entre ces deux éléments. De même, dans cette position, les ergots 21 sont insérés dans les lumières 11. Cette position définit la première position évoquée plus haut, dans laquelle la poignée de la clé selon l'invention, constituée ici par le poussoir 2 et son bouton 20, est insérée et verrouillée dans la clé, elle-même constituée du poussoir 2, de l'organe femelle 1, et de l'élément de blocage (ici la tige) 3.

Il est à noter que les lumières 11, dans lesquelles les ergots 21 sont insérés lorsque l'ensemble se trouve dans la première position décrite ci-dessus, ont pour rôle, lors de l'insertion et de la poussée du poussoir 2 dans l'organe femelle 1, d'aider à l'évacuation de l'air contenu dans cet organe femelle et, ainsi, de faciliter le coulissement du poussoir.

Pour déverrouiller la poignée de la clé selon l'invention, il suffit alors d'exercer une poussée sur le bouton 20 : cette poussée est rendue possible par le faible jeu qui subsiste entre ce bouton et la collerette 12 de l'organe femelle. Sous l'effet de cette poussée, la tige 3 est alors libérée de son point d'arrêt 220 dans le chemin 22, et elle peut être guidée, par l'effet du ressort qui pousse le poussoir 2, le long de ce chemin jusqu'à un point de butée 221 situé à l'extrémité opposée de ce chemin au regard du point d'arrêt 220.

Les lumières 11 aident alors à l'entrée de l'air dans l'organe femelle 1 lorsque le poussoir est déverrouillé.

Lorsque l'utilisateur tire sur la poignée pour extraire la clé des rainures des éléments de mobilier pour les désassembler, la lumière 10 favorise le passage d'air entre l'extérieur et le fond des rainures des éléments de mobilier, rendant ainsi plus aisé la manipulation de la clé dans ces rainures.

Les lumières 11 peuvent être avantageusement réalisés jusqu'à l'extrémité de la clé au voisinage de la lumière 10, de manière à permettre encore plus de flux d'air lors des déplacements de la clé dans les rainures des éléments de mobilier.

Lorsque la tige 3 se trouve à son point de butée 221 dans le chemin 22, toute traction sur la poignée formée par le poussoir 2 et le bouton 20 entrainera alors nécessairement un déplacement de l'organe femelle 1, poussoir et organe femelle étant solidarisés entre eux par l'intermédiaire de la tige 3.

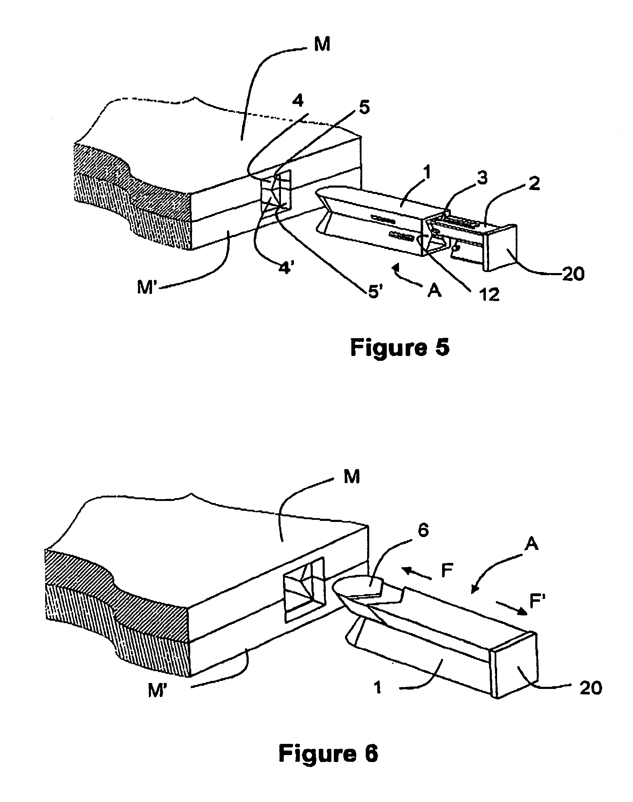

La figure 5 illustre l'assemblage de deux éléments de mobilier (partiellement représentés en M et M') de deux éléments de mobilier M et M' entre eux au moyen d'une telle clé.

Chacun des éléments M et M' comporte, sur sa face par laquelle il est destiné à être accolé avec l'autre élément de mobilier, une rainure dont la forme est celle d'une queue d'aronde. Ces rainures sont désignées respectivement par les repères 4 et 4' sur la figure 5. Les rainures 4 et 4' sont disposées de telle manière que, lorsque les éléments de mobilier M et M' sont rapprochés l'un de l'autre pour être assemblés, elles se trouvent face l'une à l'autre, en position inversée l'une au regard de l'autre. Elles forment donc une cavité dont la section droite est complémentaire de celle de l'organe femelle 1 qui, associé avec le poussoir 2 et l'élément de blocage 3, forme la clé A.

Pour réaliser l'assemblage des éléments de mobilier M et M' entre eux, la clé A est insérée dans ladite cavité jusqu'à une position de butée, qui est ici définie par le contact de la collerette 12 de l'organe femelle 1 avec l'épaisseur des éléments de mobilier M et M' à assembler.

Il est à noter que l'assemblage des deux éléments M et M' au moyen de la clé A peut être réalisé de cette manière quelle que soit la position relative de l'organe femelle 1 et du poussoir 2, notamment que ceux-ci soient ou non verrouillés entre eux. Une fois l'assemblage réalisé, toutefois, il est nécessaire, si cela n'a pas été fait préalablement, de verrouiller dans l'organe femelle 1 la poignée que constitue le poussoir 2, tant pour des raisons fonctionnelles afin de s'assurer que la clé A ne peut pas être retirée facilement, que pour des raisons de sécurité pour éviter toute blessure causée par la clé A lorsqu'elle est saillante ou pour des raisons esthétiques. Dans ce but, une poussée est exercée sur le bouton 20 une fois la clé A mise en place, jusqu'à ce que l'élément de blocage soit dans sa position qui définit la première position de la clé selon l'invention, première position dans laquelle la poignée que constituent le poussoir et le bouton sont insérés en totalité dans l'organe femelle 1 et verrouillés avec ce dernier. Dans cette position, selon différents modes de réalisation, le bouton 20 peut ou non être saillant sur la façade de l'assemblage, c'est-à-dire sur l'épaisseur des éléments de mobilier M et M'.

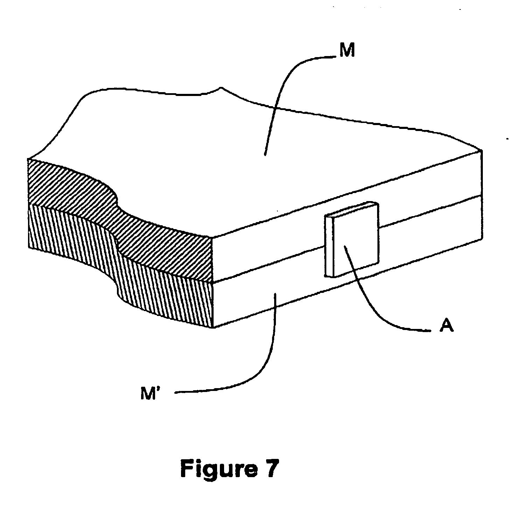

Selon le mode de réalisation illustré par la figure 5, un chambrage est réalisé sur l'épaisseur de chacun des éléments de mobilier M et M', autour de l'entrée de la rainure qu'ils portent. Ce chambrage est représenté en 5 et 5' sur la figure. La forme et la profondeur dudit chambrage sont définies de telle manière que, une fois la collerette 12 en butée contre le fond de ce chambrage, le bouton 20 affleure la façade de l'assemblage. Le bouton 20 peut toutefois être un élément décoratif de l'assemblage et se trouver, lorsque la collerette 12 est en butée contre l'épaisseur des éléments de mobilier à assembler, saillant sur la façade d'assemblage, comme le montre la figure 7.

Une fois la clé A mise en place, sa forme rend son retrait impossible autrement que par coulissement longitudinal inverse selon la même direction que celle de son insertion.

Il suffit pour cela d'exercer une pression sur le bouton 20 : ainsi qu'il a été décrit plus haut, l'élément de blocage est alors libéré de son point d'arrêt 220 et guidé jusqu'à son point de butée 221. Dans cette position, et ainsi qu'il a été exposé précédemment, toute traction longitudinale exercée sur la poignée que constituent le bouton 20 et le poussoir 2 entraînera nécessairement l'organe femelle à coulisser longitudinalement au sein de la cavité formée par les rainures 4 et 4' : la clé A peut alors être retirée et les éléments de mobilier désassemblés. Il est à noter que les lumières 11 permettent dans ce cas une entrée d'air dans l'organe femelle 1 et empêchent ainsi tout effet de ventouse qui pourrait rendre plus difficile le coulissement du poussoir par traction.

L'invention permet ainsi de réaliser simplement un assemblage fiable de deux éléments de mobilier entre eux, dans la mesure où ces éléments comportent chacun une face plane par laquelle ils sont accolés, et sur laquelle une rainure peut être ménagée pour l'insertion de la clé selon l'invention.

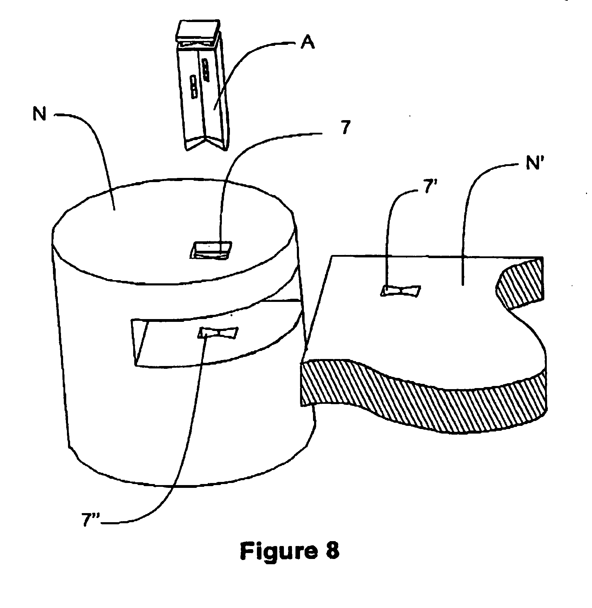

Selon un autre mode de réalisation illustré par la figure 8, la clé A traverse les éléments N et N' lorsque les parties évidées (7, 7', 7") sont positionnées de manière coïncidente permettant le passage de ladite clé, dont le retrait est impossible autrement que par coulissement longitudinal inverse selon la même direction que celle de son insertion.

Cet assemblage peut être également facilement démonté sans nécessité d'utiliser d'outil particulier grâce à la poignée de manoeuvre que la clé selon l'invention comporte.

Il est toutefois à noter que l'invention ne saurait se limiter aux modes et moyens de réalisation qui ont été décrits dans le présent document, et qu'elle s'étend en particulier à tous moyens équivalent et à toute combinaison techniquement opérante de tels moyens.

En particulier, la poignée de manoeuvre peut être constituée du poussoir et du bouton qu'il porte en sa face avant, mais elle peut également comporter d'autres éléments que le poussoir entraîne dansson coulissement. La figure 6 montre ainsi un mode de réalisation alternatif de l'invention dans lequel un élément 6, situé à l'arrière de la clé, se déplace longitudinalement (sens indiqué par la flèche F sur la figure 6) dès lors qu'une poussée est exercée sur le bouton 20 lorsque celui-ci est dans sa position de verrouillage dans la clé, pour ensuite repousser en sens inverse (sens indiqué par la flèche F' sur la figure 6) la poignée qui est alors formée de l'organe femelle 1 et d'une partie du poussoir 2.

D'autre part, si la forme en double queue d'aronde est privilégiée en raison de ses propriétés mécaniques connues par ailleurs, elle n'est pas exclusive, et toute forme qui permet une insertion par coulissement longitudinal dans une rainure de forme correspondante et qui interdit tout retrait autrement que par coulissement longitudinal inverse dans la même rainure pourra être mise en oeuvre : forme en 8, en H couché, etc.

De même, toute forme de verrouillage mettant en oeuvre un élément se déplaçant dans un chemin prédéfini entre une position d'arrêt qui définit la première position, verrouillée, de la poignée dans la clé, et une position de butée à partir de laquelle la clé peut être retirée de l'assemblage, peut être utilisée sans que cela nuise à l'invention.

Par ailleurs, et ainsi qu'il a été mentionné précédemment, l'élément de blocage peut être un élément distinct lié à la fois à l'organe femelle et au poussoir, ainsi qu'il a été décrit dans le présent document, mais il peut également constituer une partie de l'un ou l'autre de ces composants, et être porté par l'un ou l'autre d'entre eux, le chemin dans lequel il circule étant porté par l'autre de ces composants.

Enfin, tout moyen de l'invention s'étend également à toute clé d'assemblage qui comporte un dispositif d'extraction comprenant un moyen de verrouillage mettant en oeuvre un dispositif dans lequel, sous l'effet d'une poussée sur un poussoir, un élément de blocage est guidé jusqu'à une position de verrouillage d'une poignée de la clé selon l'invention, et dans lequel, sous l'effet d'une autre poussée sur ledit poussoir, à partir de cette position de verrouillage, l'élément de blocage est guidé à déverrouiller cette poignée et à lui permettre de se déplacer jusqu'à une position de butée dudit élément de blocage dans laquelle ladite clé peut être extraite de l'assemblage.

## Revendications

1. Clé pour l'assemblage face contre face de deux éléments de mobilier par insertion coulissante, selon une direction parallèle au plan d'accolement desdites faces, simultanément dans deux rainures dont chacune est ménagée sur la face à accoler de l'un desdits éléments, **caractérisée en ce qu'**elle comporte un dispositif d'extraction qui comprend une poignée mobile entre une première position dans laquelle ladite poignée est insérée et verrouillée dans ladite clé, et une seconde position dans laquelle ladite poignée permet la manoeuvre de ladite clé pour son extraction par coulissement dans lesdites rainures

2. Clé pour l'assemblage d'au moins deux éléments de mobilier par insertion coulissante, selon une direction perpendiculaire ou inclinée au plan d'accolement desdits éléments, simultanément au travers de parties évidées de ces éléments afin d'en assurer l'assemblage, **caractérisée en ce qu'**elle comporte un dispositif d'extraction qui comprend une poignée mobile entre une première position dans laquelle ladite poignée est insérée et verrouillée dans ladite clé, et une seconde position dans laquelle ladite poignée permet la manoeuvre de ladite clé pour son extraction par coulissement dans lesdites parties évidées.

3. Clé selon l'une des revendications 1 ou 2, **caractérisée en ce que** ladite poignée comprend, d'une part, un poussoir (2) apte à coopérer par coulissement avec un organe complémentaire (1) de ladite clé, ainsi que, d'autre part, un élément de blocage (3) qui maintient liés entre eux ledit poussoir (2) avec ledit organe complémentaire (1), et qui est apte à prendre une première position dans laquelle ledit poussoir est verrouillé avec ledit organe complémentaire, et d'autres positions dans lesquelles ledit poussoir est mobile relativement audit organe complémentaire jusqu'à une position de butée dans laquelle la poignée peut être manoeuvrée par traction pour extraire ladite clé longitudinalement.

4. Clé selon la revendication 3, **caractérisée en ce que** ledit organe complémentaire (1) est un organe femelle dans lequel ledit poussoir (2) est inséré par coulissement longitudinal, et **en ce que** ledit poussoir comporte, sur l'une de ses faces, un chemin de circulation (22) pour l'élément de blocage (3), ainsi que, d'une part, des moyens pour guider ledit élément de blocage dans ledit chemin de circulation jusqu'à un point d'arrêt (221) définissant ladite première position verrouillée dudit poussoir avec ledit organe (1), et, d'autre part, des moyens pour guider ledit élément de blocage dans ledit chemin de circulation jusqu'à un point de butée (221) qui définit ladite position de retrait de la clé par coulissement longitudinal.

5. Clé selon la revendication 4, **caractérisée en ce que** l'élément de blocage (3) est une tige métallique dont une extrémité est insérée et bloquée dans une lumière (10) ménagée à une extrémité dudit organe femelle (1), et dont l'autre extrémité est guidée dans ledit chemin de circulation.

6. Clé selon la revendication 4, **caractérisée en ce que** ledit élément de blocage est un ergot saillant réalisé sur la face interne de l'organe femelle destinée à venir en contact avec la face porteuse du chemin de circulation du poussoir.

7. Clé selon l'une quelconque des revendications 4 à 6, **caractérisé en ce que** ledit organe femelle comporte un ensemble de lumières (11) destinées à permettre le passage de l'air chassé ou aspiré lors des mouvements du poussoir en son sein.

8. Clé selon l'une quelconque des revendications 4 à 7, **caractérisée en ce que** l'organe femelle et le poussoir comportent des moyens de guidage du coulissement du poussoir, notamment un ensemble de rainures (13) complémentaires d'un ou plusieurs éléments saillants (21) réalisés sur ledit poussoir.

9. Clé selon l'une quelconque des revendications 4 à 8, **caractérisée en ce que** la face d'entrée dudit organe femelle, par laquelle le poussoir est inséré dans ce dernier, comporte une collerette (12) de butée dudit poussoir.

10. Clé selon l'une quelconque des revendications 1 à 9, **caractérisée en ce que** sa section droite a sensiblement la forme d'une double queue d'aronde.

11. *Mobilier modulaire, **caractérisé en ce qu'**il est muni d'au moins une clé selon l'une quelconque des revendications 1 ou 3 à 10 et d'au moins deux éléments comportant au moins une face plane dont la section droite présente une forme complémentaire de celle de la demi section droite correspondante de la dite clé d'assemblage.*

12. *Mobilier modulaire selon la revendlcation 11,* **caractérisé en ce *que*** *les éléments de mobilier comportent,* sur l'une de *leurs* faces perpendiculaires à la face dans laquelle ladite rainure (4, 4') est ménagée, autour de l'orifice débouchant de ladite rainure, un chambrage dont la forme et la profondeur sont respectivement complémentaires de la forme d'une moitié de la face d'extraction d'une clé selon l'une quelconque des revendications 1 à 10 et de l'épaisseur de ladite face d'extraction.

13. Mobilier modulaire, **caractérisé en ce qu'**il comporte au moins deux éléments présentant une partie évidée et muni d'au moins une clé selon l'une quelconque des revendications 2 à 10 qui les assemble en les traversant partiellement ou totalement.

## Patentansprüche

1. Schlüssel für den Zusammenbau von aneinander angrenzenden Seiten zweier Möbelteile durch parallel zur Verbindungsebene der Seiten durchzuführendes, gleichzeitiges Einschieben in zwei Rillen, von denen je eine auf der zu verbindenden Seite eines der Möbelteile ausgeführt ist, **dadurch gekennzeichnet, dass** er eine Abziehvorrichtung mit einem Griff hat, der sich zwischen einer ersten Position, in der der Griff in den Schlüssel eingeführt und dort verriegelt wird, und einer zweiten Position bewegen lässt, in der der Griff das Bewegen des Schlüssels zum Abziehen desselben durch Herausziehen aus den Rillen ermöglicht.

2. Schlüssel für den Zusammenbau von mindestens zwei Möbeiteilen durch querab oder schräg zur Verbindungsebene durchzuführendes, gleichzeitiges Einschieben durch Aussparungen in den Möbeiteilen für deren Zusammenbau, **dadurch gekennzeichnet, dass** er eine Abziehvorrichtung mit einem Griff hat, der sich zwischen einer ersten Position, in der der Griff in den Schlüssel eingeführt und dort verriegelt wird, und einer zweiten Position bewegen lässt, in der der Griff das Bewegen des Schlüssels zum Abziehen desselben durch Herausziehen aus den Aussparungen ermöglicht.

3. Schlüssel nach Anspruch 1 oder 2, **dadurch gekennzeichnet, dass** der Griff zum einen ein Schiebeteil (2), das beim Verschieben mit einem formschlüssigen Teil (1) des Schlüssels zusammenwirkt, und zum anderen ein Sperrteil (3) hat, das das Schiebeteil (2) und das formschlüssige Teil (1) zusammenhalt, und so konzipiert ist, dass er eine erste Position, in der das Schiebeteil mit dem formschlüssigen Teil verriegelt ist, und weitere Positionen einnehmen kann, in denen das Schiebeteil sich bis in eine Anschlagposition zum formschlüssigen Teil bewegen lasst, in der der Griff durch Ziehen so bewegt werden kann, dass der Schlüssel sich in Längsrichtung abziehen lässt.

4. Schlüssel gemäß Anspruch 3, **dadurch gekennzeichnet, dass** das formschlüssige Teil (1) ein aufnehmendes Teil ist, in das das Schiebeteil (2) in Längsrichtung geschoben wird, und dadurch, dass das Schiebeteil an einer Seite eine Laufbahn (22) für das Sperrteil (3) sowie zum einen Vorrichtungen hat, die das Sperrteil auf der Laufbahn bis zu einem Haltepunkt (221) führen, der der ersten Position zur Verriegelung des Schiebetells mit dem formschlüssigen Teil (1) entspricht, und zum anderen Vorrichtungen hat, die das Sperrteil auf der Laufbahn bis zu einem Anschlagpunkt (221) führen, der der Schlüsselabziehposition durch Verschieben in Längsrichtung entspricht.

5. Schlüssel gemäß Anspruch 4, **dadurch gekennzeichnet, dass** das Sperrteil (3) eine Metallstange ist, deren eines Ende in eine am Ende des aufnehmenden Teils (1) ausgeführte Öffnung (10) eingeführt und darin gesperrt wird und deren anderes Ende durch die Laufbahn geführt wird.

6. Schlüssel nach Anspruch 4, **dadurch gekennzeichnet, dass** das Sperrteil von einer Nase an der Innenseite des aufnehmenden Teils gebildet wird, die in Berührung mit derjenigen Seite kommen soll, an der sich die Laufbahn des Schiebeteils befindet.

7. Schlüssel nach einem der Ansprüche 4 bis 6, **dadurch gekennzeichnet, dass** das aufnehmende Teil mehrere Öffnungen (11) zum Durchlassen der beim Bewegen des Schiebeteils herausgepressten oder angesaugten Luft hat.

8. Schlüssel nach einem der Ansprüche 4 bis 7, **dadurch gekennzeichnet, dass** das aufnehmende Teil Führungsvorrichtungen für das Verschieben des Schiebeteils hat, namentlich einen Satz Rillen (13), die formschlüssig mit einem oder mehreren hervorstehenden, am Schiebteil ausgeführten Tell(en) (21) sind.

9. Schlüssel nach einem der Ansprüche 4 bis 8, **dadurch gekennzeichnet, dass** die Eingangsseite des aufnehmenden Teils, durch die das Schiebeteil in dieses eingeführt wird, einen Anschlagkragen (12) für das Schiebeteil hat.

10. Schlüssel nach einem der Ansprüche 1 bis 9, **dadurch gekennzeichnet, dass** dessen Querschnitt annähernd die Form eines doppelten Schwalbenschwanzes hat.

11. Modulmöbel, **dadurch gekennzeichnet, dass** es mit mindestens einem Schlüssel gemäß einem der Ansprüche 1 oder 3 bis 10 und mit mindestens zwei Bauteilen mit wenigstens einer Flachseite ausgestattet ist, deren Querschnitt mit dem entsprechenden Halbquerschnitt des Montageschlüssels formschlüssig ist.

12. Modulmöbel nach Anspruch 11, **dadurch gekennzeichnet, dass** die Möbelteile auf einer ihrer querab zur Seite mit der Rille (4, 4') angeordneten Seiten einen Absatz haben, der um die in die Rille mündende Öffnung herum angeordnet ist, der mit der Abziehseitenhälfte eines Schlüssels gemäß einem der Ansprüche 1 bis 10 formschlüssig und von gleicher Tiefe wie diese ist und der von gleicher Dicke wie die Abziehseite ist.

13. Modulmöbel, **dadurch gekennzeichnet, dass** es mindestens zwei Bauteile mit einer Aussparung aufweist und für deren Zusammenbau mit mindestens einem, ganz oder teilweise durch diese durchgehenden Schlüssel gemäß einem der Ansprüche 2 bis 10 ausgestattet ist.

## Claims

1. Connection fitting for assembling two abutting surfaces of furniture components by sliding insertion, in a direction parallel to the abutment plane of said surfaces, along two grooves simultaneously, each groove being provided on the pairing surface of one of said components, **characterized in that** it includes an extraction device comprising a handle that is moveable between a first position in which said handle is inserted and locked in said connection fitting, and a second position in which said handle enables movement of said connection fitting for extracting the latter by sliding in said grooves.

2. Connection fitting for assembling at least two components of furniture by sliding insertion, in a direction perpendicular or at an angle to the abutment plane of said components, via the recessed portions of said components simultaneously, thus ensuring assembly, **characterized in that** it includes an extraction device comprising a handle that is moveable between a first position in which said handle is inserted and locked in said connection fitting, and a second position in which said handle enables movement of said connection fitting for extracting the latter by sliding in said recessed portions.

3. Connection fitting as per claim 1 or 2, **characterized in that** said handle comprises, on the one hand, a pusher (2) capable of engaging with an additional member (1) of said connection fitting and, on the other hand, a locking member (3) which maintains the connection between said pusher (2) and said additional member (1), and which is capable of adopting a first position in which said pusher is locked with said additional member, and other positions in which said pusher is moveable relative to said additional member, up to a stop position in which the handle may be moved by traction to extract said connection fitting longitudinally.

4. Connection fitting as per claim 3, **characterized in that** said additional member (1) is a female member in which said pusher (2) is inserted by longitudinal sliding, and **in that** said pusher comprises, on one of its surfaces, a travel path (22) for the locking member (3), as well as, on the one hand, means of guiding said locking member in said travel path up to a stop point (221) defining said first locked position of said pusher with said additional member (1), and, on the other hand, means for guiding said locking member in said travel path up to a stop point (221) which defines said withdrawal position of the connection fitting by longitudinal sliding.

5. Connection fitting as per claim 4, **characterized in that** the locking member (3) is a metal rod, one end of which is inserted and locked into a slot (10) provided at one end of said female member (1), and the other end of which is guided along said travel path.

6. Connection fitting as per claim 4, **characterized in that** said locking member is a projecting lug provided on the internal surface of the female member, intended to come into contact with the carrier surface of the travel path of the pusher.

7. Connection fitting as per any of claims 4 to 6, **characterized in that** said female member comprises a plurality of slots (11) intended to allow the passage of air eliminated or aspirated during movements of the pusher therein.

8. Connection fitting as per any of claims 4 to 7, **characterized in that** the female member and the pusher comprise means of guiding the sliding of the pusher, in particular a plurality of grooves (13) complementary to one or more projecting lugs (21) provided on said pusher.

9. Connection fitting as per any of claims 4 to 8, **characterized in that** the entrance surface of said female member, via which the pusher is inserted into the latter, comprises a stop flange (12) for said pusher.

10. Connection fitting as per any of claims 1 to 9, **characterized in that** its cross section has a substantially double dovetail shape.

11. Modular furniture, **characterized in that** it is fitted with at least one connection fitting as per any of claims 1 or 3 to 10 and at least two components comprising at least one planar surface, the cross section of which has a shape complementary to that of the corresponding half cross section of said connection fitting.

12. Modular furniture as per claim 11, **characterized in that** the furniture components have, on one of their surfaces perpendicular to the surface on which said groove (4, 4') is provided, around the aperture at the mouth of said groove, a recess, the shape and depth of which are respectively complementary to the shape of one half of the extraction surface of a connection fitting as per any of claims 1 to 10, and the thickness of said extraction surface.

13. Modular furniture, **characterized in that** it comprises at least two components having a recessed portion and fitted with at least one connection fitting as per any of claims 2 to 10, which assembles them by passing through them partially or totally.
